Europäisches Patentamt

European Patent Office

Office européen des brevets

(11) Publication number: **0 633 184 A1**

# EUROPEAN PATENT APPLICATION

(21) Application number: **94110419.2**

(22) Date of filing: **05.07.94**

(51) Int. Cl.6: **B64C 31/02**, B64D 43/00

(30) Priority: **09.07.93 IL 10629493**

(43) Date of publication of application:
**11.01.95 Bulletin 95/02**

(84) Designated Contracting States:
**CH DE IT LI**

(71) Applicant: **ARAN ENGINEERING DEVELOPMENT Ltd**
**P.O. Box 852**
**Kfar Shemaryahu 46910 (IL)**

(72) Inventor: **Zakai, Avi**
**10 Nachal Soreq Str.**
**Rishon-LeZion 75246 (IL)**

(74) Representative: **VOSSIUS & PARTNER**
**Siebertstrasse 4**
**D-81675 München (DE)**

(54) **Steering aid for steering a glider.**

(57) A steering aid (12) for aiding a glider pilot (10) to steer into an upwardly moving air current, the steering aid comprising channelling means (15, 16) for channelling therethrough a substantially non-turbulent air current and direction sensing means mounted in conjunction with the channelling means for sensing the air current and for producing respective first and second signals, depending on a direction of flow of the air current through the channelling means. An indication means is coupled to the direction sensing means and responsive to the first or second signal for producing respective indication signals.

Fig.2

EP 0 633 184 A1

## FIELD OF THE INVENTION

This invention relates to a steering aid for aiding the pilot of airborne aircraft such as gliders and the like.

## BACKGROUND OF THE INVENTION

In perfectly calm weather conditions, a glider proceeds along a downward-sloping path whose angle is dependent upon the ratio of drag to lift. Specifically, the greater the drag, the steeper is the slope of the flight path.

Consequently, in calm weather conditions, the flight duration is a function of the gliding angle. However, the principal skill in gliding consists in finding and exploiting upward air currents which enable the glider pilot to soar higher, thereby extending the flight duration. A glider, though "heavier than air", can rise if the upward force due to the rising air exceeds the weight of the glider. Considerable skill is required to locate rising air currents and the skilled glider pilot will be assisted, for example, by birds soaring in the air without flapping their wings, thereby indicating that they, too, are being lifted by an upwardly moving air current.

Upwardly moving air currents may be caused by local heating of the air and typically develop on hillsides, over warm areas of land and under cloud formations. Since, as is known, warm air rises, such local heating of the air gives rise to the desired upwardly moving air currents.

Upon entering such an upwardly moving air current, the glider pilot will immediately sense an uplift and, in order fully to exploit the rising air current, he will endeavor to steer the glider into the air current so that the whole of the glider is subjected to the upwardly moving air current and not merely the extremity of the aircraft which first entered the air current. No foolproof way has been suggested for steering into the air current and what has generally been done up till now has been to rely on guesswork combined with trial and error. Specifically, the glider pilot steers whichever way he feels is correct and if he experiences a greater lifting force, he knows that his guess was correct. If, to the contrary, the glider starts to descend, this indicates that he steered the wrong way and he must take such compensatory action as is called for.

It would clearly be desirable to provide a steering aid which would indicate to the pilot of a glider aircraft into which direction he must steer the aircraft so as to take better advantage of a rising air current.

## SUMMARY OF THE INVENTION

It is an object of the invention to provide a steering aid for aiding a glider pilot to steer into an upwardly moving air current.

According to the invention there is provided a steering aid for aiding a glider pilot to steer into an upwardly moving air current, the steering aid characterized by:

channelling means for channelling therethrough an air current,

direction sensing means mounted in conjunction with the channelling

means for sensing the air current and for producing respective first and second signals, depending on a direction of flow of the air current through the channelling means, and

indication means coupled to the direction sensing means and responsive to the first or second signal for producing respective indication signals.

Preferably, the channelling means includes a hollow tube mounted downstream of the glider in front of the pilot so as to avoid channelling therethrough turbulent air behind the glider caused by the glider's motion. The hollow tube is provided at opposite ends thereof with downwardly depending openings for admitting a rising air current therethrough.

In a preferred embodiment of the invention, a differential sensor including a pair of thermistors is mounted inside the hollow tube so as to be subjected to a passing air current. An indication means is provided comprising a pair of different colored LEDs, only one of which is illuminated according to which of the two the thermistors is at a higher temperature. By this means, the pilot knows toward which end of the hollow tube an upwardly moving air current is situated and can thus deterministically steer the aircraft into the upwardly moving air current.

## BRIEF DESCRIPTION OF THE DRAWINGS

In order to understand the invention and to see how the same may be carried out in practice, a preferred embodiment will now be described, by way of non-limiting example only, with reference to the accompanying drawings, in which:

Fig. 1 is a plan view of a glider having superimposed thereon isothermal lines indicating variations in vertical air velocity;

Fig. 2 is a pictorial representation of a glider aircraft wherein there is mounted a steering aid according to a first embodiment of the invention;

Fig. 3 is a perspective view of a detail of the steering aid shown in Fig. 2;

Fig. 4 is a circuit diagram of a temperature sensor for use with the steering aid shown in Figs. 2 and 3;

**Fig. 5** is a pictorial representation of a glider aircraft wherein there is mounted a steering aid according to a second embodiment of the invention;

**Fig. 6** is a schematic diagram showing a preferred orientation of the steering aid relative to a direction of travel of the glider;

**Fig. 7** is a pictorial representation of a preferred display device for indicating the direction of air flow; and

**Fig. 8** is a schematic representation useful in explaining the operation of the display device depicted in Fig. 7.

## DETAILED DESCRIPTION OF PREFERRED EMBODIMENTS

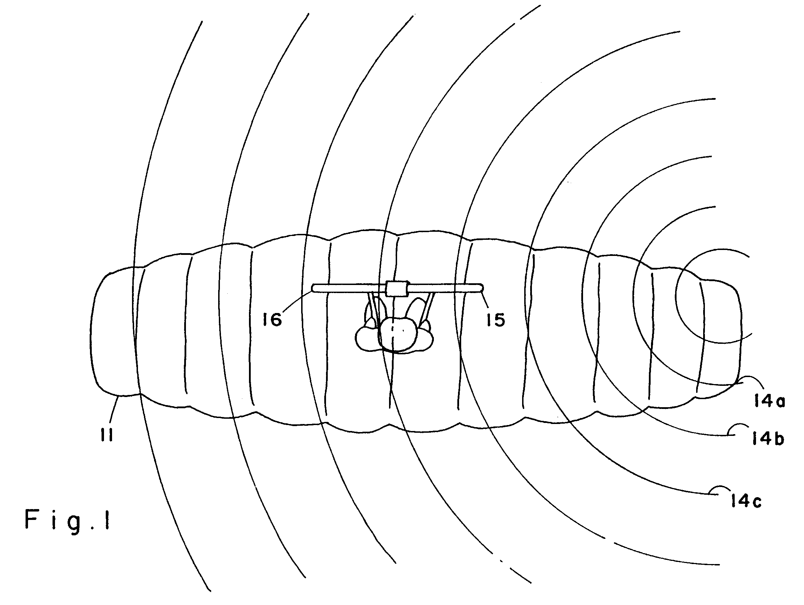

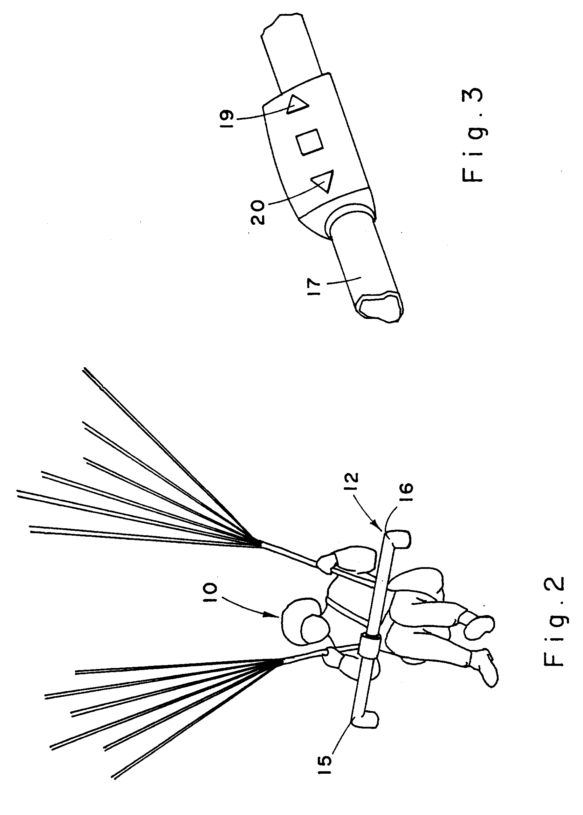

Referring to Figs. 1 to 3, there is shown a pilot 10 seated in a glider 11, there being mounted in front of the glider pilot 10 a steering aid 12 according to a first embodiment of the invention. Superimposed over the glider 11 are a series of isovertical speed lines 14a, 14b, 14c, etc., along each one of which the vertical air speed is constant. The smaller the radius of the isovertical speed line, the greater is the upward air velocity. Consequently, in the situation depicted in Fig. 1, a first end 15 of the steering aid 12 experiences a greater uplift than a second end 16 thereof opposite to the first end 15, and the pilot 10 must steer the glider 11 to the right, whereby the second end 16 is directed into the upwardly moving air current.

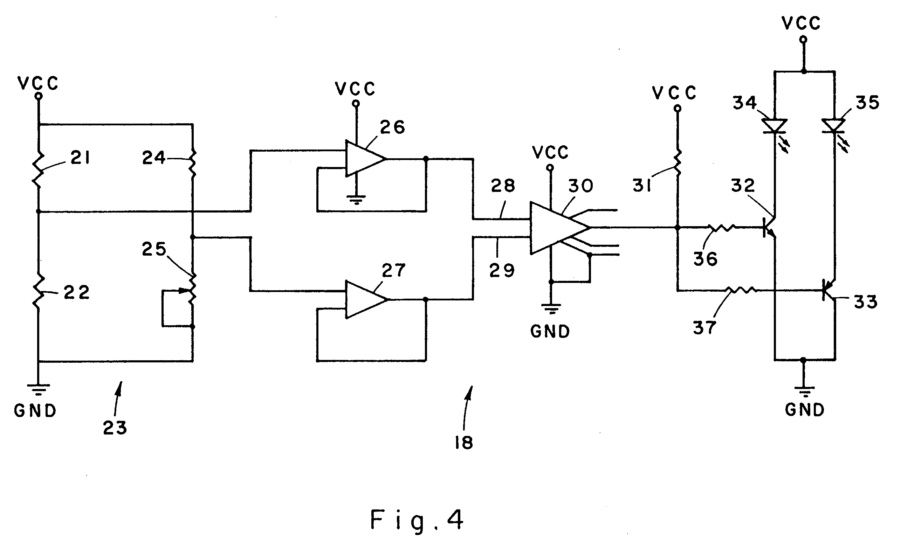

To this end, the steering aid 12 comprises a substantially U-shaped hollow tube 17 having at the first and second ends 15 and 16 thereof respective, downwardly depending openings for admitting a rising air current therethrough. Mounted within the hollow tube 17 is a differential temperature sensor 18 (see Fig. 4) which is subjected to a net air current flowing through the hollow tube 17. The temperature sensor constitutes a direction sensing means for determining the direction of the air flow through the hollow tube 17.

A pair of red or green LEDs 19 and 20 is provided on the steering aid 12 and constitutes an indication means which is coupled to the temperature sensor 18. When the net air flow is from the first end 15 of the tube 17 toward the second end 16 thereof, the LED 19 is illuminated, indicating to the pilot 10 that he must steer the glider 11 to the right. Conversely, when the net air flow through the tube 17 is from the second end 16 toward the first end 15 thereof, the LED 20 is illuminated, indicating to the pilot 10 that he must steer the glider 11 to the left.

Fig. 4 is a circuit diagram of the differential temperature sensor 18. A pair of thermistors 21 and 22 are connected in adjacent branches of a Whetstone bridge network 23 in opposite branches of which are connected suitable resistors 24 and 25. A voltage $V_{cc}$ is connected to the junction of the thermistor 21 and the resistor 24, whilst the junction between the thermistor 22 and the resistor 25 is connected to ground, GND. The resistor 25 is adjustable so that when the two thermistors 21 and 22 are subjected to identical temperatures, the Whetstone bridge is balanced, the voltages appearing across the respective junctions between the thermistors 21 and 22 and the resistors 24 and 25 being identical.

The junctions between the thermistors 21 and 22 and between the resistors 24 and 25 are respectively connected to a pair of operational amplifiers 26 and 27, each connected as a voltage follower and having respective outputs which are coupled to corresponding inputs 28 and 29 of a comparator 30. The operational amplifiers 26 and 27 serve as buffers which effectively prevent the comparator 30 from loading the Whetstone bridge 23.

An output 31 of the comparator 30 is at nominally zero voltage in the event that the Whetstone bridge 23 is exactly balanced, whereby the voltages appearing at the input 28 and 29 of the comparator 30 are identical. However, if the thermistor 21 is warmer than the thermistor 22, then the resistance of the thermistor 21 falls relative to the resistance of the thermistor 22 (both thermistors having negative temperature coefficients), whereby the voltage appearing across the thermistor 21 is lower than the voltage appearing across the thermistor 22. Under these conditions, the voltage appearing at the input 28 of the comparator 30 is higher than the voltage appearing at the input 29 of the comparator 30 and the voltage appearing at the output 31 of the comparator is positive. Conversely, if the thermistor 22 is hotter than the thermistor 21, the opposite obtains and the voltage appearing at the output 31 of the comparator 30 is negative.

Connected to the output 31 of the comparator 30 are a pair of switching means comprising an NPN bipolar junction transistor 32 and a PNP bipolar junction transistor 33, respective bases of which are connected to the output 31 of the comparator 30 via resistors 34 and 35. The emitter of the NPN transistor 32 and the collector of the PNP transistor 33 are commonly connected to GND. The collector of the NPN transistor 32 and the emitter of the PNP transistor 33 are connected to the cathodes of respective red and green LEDs 34 and 35, whose anodes are commonly connected to the positive supply rail $V_{cc}$. The red and green LEDs 34 and 35 are mounted in a single encapsulation and operate in a manner which will now be explained.

When the voltage appearing at the output 31 of the comparator 30 is positive, then NPN transistor 32 conducts whilst the PNP transistor 33 is cutoff. Under these conditions, only the red LED 34 is illuminated. Conversely, when the voltage appearing at the output 31 of the comparator 30 is negative, the NPN transistor 32 is cutoff whilst the PNP transistor 33 conducts. Under these conditions, the green LED 35 is illuminated.

When the two thermistors 21 and 22 are exposed to equal temperatures, the Whetstone bridge 23 is balanced and nominally the voltages appearing at the input terminals 28 and 29 of the comparator 30 are identical, thereby producing a zero voltage at the output 31 of the comparator 30. However, in practice, such a stable condition is unobtainable and the voltage appearing at the output 31 of the comparator 30 oscillates between a slightly negative value and a slightly positive value. Under these conditions, the red and green LEDs 34 and 35 are alternately switched on and off and, on account of their being commonly encapsulated, a net yellow/orange color is produced. This provides the glider pilot 10 with a visual indication that he has steered the glider 11 correctly into the upwardly moving air current.

In such an arrangement, both of the thermistors 21 and 22 are warmer than the air flowing through the hollow tube 17 owing to the heating effect of the voltage $V_{cc}$ applied across the Whetstone bridge 23. Consequently if air flows from the first thermistor 21 towards the second thermistor 22, the passing air tends to cool down the first thermistor 21 whilst being locally heated thereby. Thus, the air now flowing past the second thermistor 22 is slightly warmer and does not cool down the second thermistor 22 to the same extent. As a result, assuming that the Whetstone bridge 23 were previously balanced, the two thermistors 21 and 22 will now exhibit slightly different temperatures, permitting the direction of air flow through the tube 17 to be determined.

It will, however, be appreciated that any other suitable sensors may be employed in the Whetstone bridge 23. Thus, for example, a pair of strain gauges may be employed each of which is subjected to different mechanical forces depending on the air pressure such that the net deflection of the two sensors is a function of the air pressure and thereby, indirectly, of the location of the center of the rising air current. In such case there is no requirement that the sensors be housed within a tube, but only that the two sensors be displaced spatially so that the direction of air flow can be calculated from their respective deflections. Alternatively, a membrane may be housed within a tube open at opposite ends to the air, so that the net deflection of the membrane is a function of the differential pressure resulting from the different air velocities on both sides of the membrane.

The hollow tube 17 may, if desired, be resilient so as to permit it more easily to be mounted on the glider 11. Although in the preferred embodiment the tube 17 is U-shaped, the only requirement is that there be provided at opposite ends thereof with respective downwardly depending openings for admitting air therethrough. The shape of the tube between its two extremities is of no particular consequence.

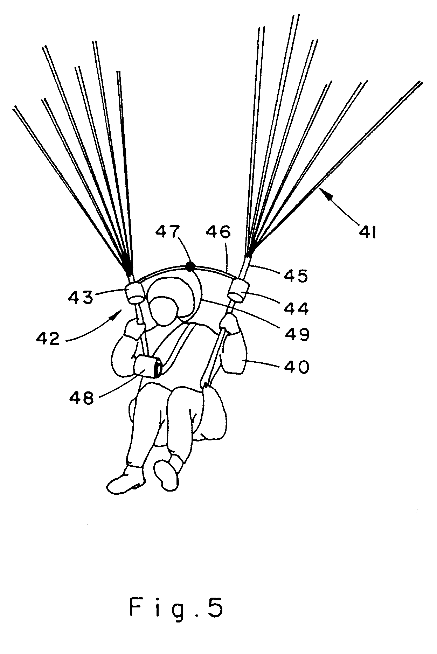

In this connection, reference will now be made to Fig. 5 wherein there is shown a pilot 40 seated in a glider 41, there being mounted proximate the pilot 40 a steering aid depicted generally as 42 according to a second embodiment of the invention. The steering aid 42 comprises a pair of tubes 43 and 44 for admitting a rising air current therethrough, and being disposed behind the pilot 40 and mounted on the support ropes 45 of the glider. The tubes 43 and 44 are interconnected by a flexible conduit 46 mounted within which is a differential temperature sensor 47 which is subjected to a net air current flowing through the conduit 46 and constitutes a direction sensing means for determining the direction of the air flow through the conduit 46. The temperature sensor 47 is functionally similar to that described in detail above with reference to Fig. 4 of the drawings, but only the sensor 47 is mounted within the conduit 46, the remaining circuitry being mounted in a direction indication meter 48 located in front of the pilot 40 for easy vision. The sensor 47 is electrically coupled to the direction indication meter 48 by means of a wire 49.

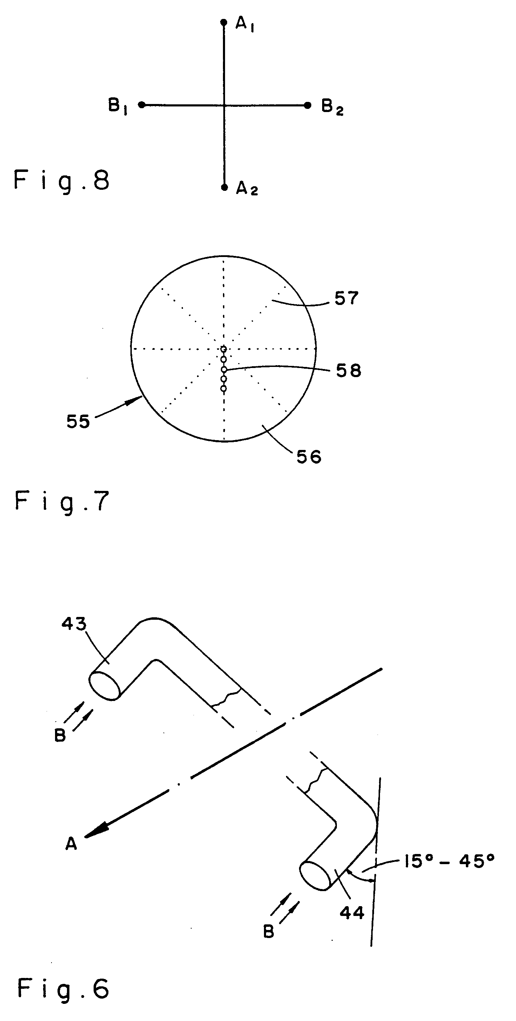

Referring to Fig. 6, it will be understood that as the air is rising nominally vertically, the glider is moving nominally horizontally as shown by the arrow **A**. The air flow relative to the glider is therefore the vector difference between the glider and air velocities and is depicted by the arrows **B**. If the tubes 43 and 44 are disposed vertically, there may be a tendency for rising air to enter the tubes at such an angle as to impede horizontal motion of the glider and cause stalling. It is therefore preferable to orientate the tubes 43 and 44 at an angle of between 15 and 45° to the vertical depending on the average speed of the glider, so that they are approximately aligned with the vector direction of the rising air current relative to the glider. Thus, the higher the average speed of the glider, the greater must be the angle of the tubes 43 and 44 to the vertical.

Fig. 7 shows semi-pictorially an LCD indication meter 55 for indicating the direction of the center of the rising air current and its speed gradient to the glider pilot. The indication meter 55 comprises a compass-type face 56 having a plurality of radial display bars 57 each formed of a plurality of pixels 58. In use, the velocity of air flow is determined and one of the display bars 57 is illuminated according to the direction of air flow velocity. The number of pixels energized within the illuminated display bar 57 is proportional to the magnitude of the air flow velocity. By such means, the indication meter 55 provides a visual indication of the direction of the center of the rising air current as well as its speed gradient and permits him to steer the glider as required.

Referring to Fig. 8 there is shown schematically how the air flow velocity is determined. A first pair of sensors $A_1$ and $A_2$ measure the air flow in one direction whilst a second pair of sensors $B_1$ and $B_2$, disposed perpendicular to the first pair of sensors, measure the air flow in an orthogonal direction. The sensors $A_1$, $A_2$, $B_1$ and $B_2$ may be strain gauges which deform responsive to air pressure and provide an indication of actual, as opposed to differential, air flow.

Depicting $A = A_1 - A_2$
and $B = B_1 - B_2$

it may be shown that:

$D = \sqrt{A^2 + B^2}$

and

$$L = \arctan\left(\frac{A}{B}\right)$$

where:

    $D$    is the net magnitude of the air flow, and
    $L$    is the net direction of the air flow.

Whilst, in the first preferred embodiment, a pair of LEDs is used, a bar LED may also be employed so that more of fewer LEDs are illuminated depending on the output voltage of the comparator. This provides a qualitative indication of the actual air speed through the hollow tube 17.

There is thus provided in accordance with the invention a steering aid which takes the guesswork out of steering a glider into an upwardly moving air current and permits the glider pilot to steer the glider correctly into the air current.

**Claims**

1. A steering aid (12, 42) for aiding a glider pilot (10, 40) to steer into an upwardly moving air current, the steering aid characterized by:
   channelling means (15, 16, 43, 44) for channelling therethrough an air current,
   direction sensing means (18, 47) mounted in conjunction with the channelling means for sensing the air current and for producing respective first and second signals, depending on a direction of flow of the air current through the channelling means, and
   indication means (19, 20, 48) coupled to the direction sensing means and responsive to the first or second signal for producing respective indication signals.

2. The steering aid according to Claim 1, wherein:
   the channelling means includes a hollow tube (17, 46) mounted proximate the glider pilot, having at opposite ends thereof respective downwardly depending openings (15, 16, 43, 44) for admitting the upwardly moving air current therethrough, and
   the direction sensing means (18, 47) is mounted inside the hollow tube so as to be subjected on opposite sides thereof to the respective air currents entering said openings.

3. The steering aid according to Claim 1 or 2, wherein the direction sensing means comprises:
   a bridge network (23) having a pair of sensors (21, 22) therein such that when the sensors are exposed to a differential air flow a net voltage is developed across the bridge network, and
   a comparator (30) having a pair of input terminals (28, 29) connected across the bridge network and responsive to said voltage being positive or negative for producing said first and second signals.

4. The steering aid according to any one of Claims 1 to 3, wherein each of the sensors is a thermistor responsive to a difference in air temperature at opposite ends of the channelling means for producing said net voltage.

5. The steering aid according to any one of Claims 1 to 3, wherein each of the sensors is a strain gauge responsive to a difference in air pressure at opposite ends of the channelling means for producing said net voltage.

6. The steering aid according to any one of Claims 3 to 5, wherein the illumination means includes a pair of different colored LEDs (19, 20) in a common encapsulation, only one of said LEDs being illuminated when the bridge network is unbalanced and both of the LEDs being alternately illuminated when the bridge network is nominally balanced so as to produce a combination color distinct from the colors of the LEDs.

7. The steering aid according to Claim 6, wherein the LEDs are red and green, respectively, and the combination color is close to yellow.

8. The steering aid according to Claim 6 or 7, wherein the LEDs are each switchably coupled to an output of the comparator via a corresponding normally open switching means including an NPN (32) and a PNP (33) bipolar junction transistor, respectively, responsive to positive and negative base voltages respectively for changing from a normally open state to a closed state.

9. The steering aid according to any one of Claims 1 to 5, wherein the indication means comprises:
    a pair of illumination means (34, 35) each switchably coupled to the direction sensing means via respective normally open switching means which are responsive to the first and second signals for closing.

10. The steering aid according to Claim 9, wherein the respective switching means include an NPN (32) and a PNP (33) bipolar junction transistor responsive to positive and negative base voltages respectively for changing from open to closed states.

11. The steering aid according to Claim 10, where the pair of illumination means are of different colors.

12. The steering aid according to Claim 11, wherein the illumination means are LEDs.

13. The steering aid according to Claim 2, wherein the hollow tube (47) is resilient.

14. The steering aid according to Claim 2 or 13, wherein the hollow tube (17) is substantially U-shaped.

15. The steering aid according to any one of Claims 1 to 5, wherein the indication means (55) includes a plurality of illumination means (58) such that a different number of said illumination means is illuminated depending on a magnitude of the net voltage across the bridge network.

16. The steering aid according to Claim 15, wherein the illumination means are LEDs.

17. The steering aid according to any one of Claims 1 to 5, wherein:
    the illumination means is an LCD display (55) having a plurality of angularly spaced radial lines (57) of pixels (58), and
    one of said lines of pixels is illuminated to indicate a direction of air flow.

18. The steering aid according to Claim 17, wherein a different number of said pixels (58) is illuminated depending on a magnitude of the air flow.

19. The steering aid according to Claim 1, wherein the direction sensing means comprises a strain gauge responsive to a difference in air pressure on opposite surfaces thereof so as to deform in a manner which is a function of the differential air pressure deriving from different air speeds on said surfaces.

20. The steering aid according to Claim 1, wherein:
    the direction sensing means comprises at least three non-collinear sensors each for producing a respective signal which is a function of the speed of the air striking the corresponding sensor;
    thereby permitting determination of the direction of the center of the upwardly moving air current and its speed gradient.

14a

14b

14c

15

16

11

Fig.1

Fig.2

Fig.3

Fig.4

EP 0 633 184 A1

Fig.5

Fig.8

Fig.7

Fig.6

European Patent
Office

**EUROPEAN SEARCH REPORT**

Application Number

EP 94 11 0419

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-4 591 111 (LAUGHTER)<br>* column 1, line 4 - line 8 *<br>* column 2, line 15 - line 37 *<br>* column 2, line 55 - column 3, line 36 *<br>* column 4, line 66 - column 5, line 3 *<br>* column 6, line 15 - line 26 *<br>* column 7, line 44 - line 58; figures 1,2 * | 1,3,4,20 | B64C31/02<br>B64D43/00 |

-----

|  |  |  | TECHNICAL FIELDS SEARCHED (Int.Cl.6) |
|---|---|---|---|
|  |  |  | B64C<br>B64D |

The present search report has been drawn up for all claims

| Place of search | Date of completion of the search | Examiner |
|---|---|---|
| THE HAGUE | 4 October 1994 | Zeri, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)